# EUROPÄISCHE PATENTSCHRIFT

(11) **EP 3 615 317 B1**
(45) Veröffentlichungstag und Bekanntmachung des Hinweises auf die Patenterteilung: **14.12.2022**
(21) Anmeldenummer: 18721271.7
(22) Anmeldetag: 19.04.2018
(51) Int. Cl.: B29C 73/34, B29C 73/30, B29C 73/12

(54) **MOBILE MEMBRANPRESSE**
MOBILE MEMBRANE PRESS
PRESSE À MEMBRANE MOBILE

(30) Priorität: 24.04.2017 DE 102017108649
(43) Veröffentlichungstag der Anmeldung: 04.03.2020
(73) Patentinhaber: Seilpartner Windkraft GmbH, 15366 Hoppegarten (DE)
(72) Erfinder: BECKER, Michael, 01326 Dresden (DE); MÜLLER, Holger, 01855 Sebnitz (DE); RENNER, Ole, 01099 Dresden (DE); SCHEFFEL, Christoph, 01097 Dresden (DE)
(74) Vertreter: Sperling, Thomas
(86) Internationale Anmeldenummer: PCT/DE2018/100370
(87) Internationale Veröffentlichungsnummer: WO 2018/196917

(56) Entgegenhaltungen:
- CN-Y- 2 709 150
- DE-A1-102004 062 064
- FR-A1- 2 950 079
- US-A1- 2012 145 703
- US-A1- 2013 056 131
- US-A1- 2016 009 036

## Beschreibung

Die Erfindung betrifft eine mobile Membranpresse, die insbesondere zur Herstellung hochwertiger Prepreg-Faserverbundlaminate bei Reparaturen einsetzbar ist.

Mobile Membranpressen werden zur Aushärtung von Faserverbundmaterialien eingesetzt. Die Aushärtung hochwertiger Faserverbundbauteile wird nach dem Stand der Technik in erster Linie in beheizten geschlossenen Formen durchgeführt, die über ein Dichtsystem und integrierte hydraulische oder elektrische Heizsysteme verfügen. Um Werkzeugkosten zu sparen wird dabei auch auf einseitige Werkzeuge zurückgegriffen. Bei der Verarbeitung so genannter Prepregs, mit Harz vorinfiltrierten Faserhalbzeugen, wird unter Aufbringung eines Vakuums ein Kompressionsdruck erreicht, der das auszuhärtende Faserverbundmaterial verdichtet. Als Abgrenzung gegenüber der Atmosphäre dient dabei eine Vakuumfolie aus temperaturstabilem Kunststoff. Mit diesem Verfahren können sehr hochwertige Laminate erzeugt werden.

Diese bekannte Technologie ist mit diversen Nachteilen verbunden.

Neben der Ablage der Prepregs ist dabei der Aufbau eines vakuumdichten Systems mit großen Anstrengungen und hohen Anforderungen an die fertigungstechnischen Fähigkeiten des Technikers verbunden. Darüber hinaus kann Verbrauchsmaterial nur einmal verwendet werden und ist somit mit einem hohen Abfallaufkommen verbunden, welches die Umwelt belastet. Weiterhin sind mit dem Verbrauchsmaterial hohe Kosten verbunden, die sich gerade bei mittleren Stückzahlen, bei denen eine geschlossene Form ökonomisch noch nicht lohnenswert ist, aufsummieren.

Weiterhin sind Systeme bekannt, die als Gegenstück zu einer steifen Werkzeugform statt einer Einwegfolie eine flexible, mehrfach verwendbare Membran benutzen. Beim Diaphragma-Verfahren wird eine Membran unter Aufbringung von Überdruck gegen ein Werkzeug gedrückt. Zwischen Werkzeugform und Membran befindet sich das Grundmaterial des Bauteils, welches auf diese Weise umgeformt und unter Aufwendung von Temperatur und/oder Zeit ausgehärtet wird.

Darüber hinaus haben sich vor allem im Bereich der Holztechnik und Tischlerei Vakuumpressen etabliert. Die Komprimierung und Formgebung geschieht hier mittels Unterdruck. Vakuumpressen werden in erster Linie zum Formverleimen, Flachpressen und Verkleben, zum Aufheizen und Verformen von Thermoplasten und Heißformen benutzt. Solche Vakuumpressen sind im Gegensatz zu mobilen Anwendungen stets an einen schwergewichtigen Aufbau gekoppelt. Zur Beheizung wird beispielsweise eine starre und großräumige Heizhaube vorgesehen. Die Abdichtung des Vakuums erfolgt bei diesem Prinzip üblicherweise über einen steifen, metallischen Rahmen, was die Anpassung der Membran an dreidimensionale Substratkonturen, wie es etwa bei der Reparatur von großen Rohren erforderlich ist, unmöglich macht.

Weiterhin sind Vakuumpressverfahren zur Herstellung hochwertiger Laminate aus der Luftfahrttechnik, beispielsweise aus der US 2004/0115299 A1, bekannt. Es werden hier so genannte RVB (reusable vacuum bag) - Verfahren eingesetzt. Diese wiederverwendbaren Vakuumsäcke werden prinzipiell in zwei möglichen Verfahren hergestellt. Ein Verfahren besteht im Einsatz von Silikonplatten, die über einer Werkzeugform ausgebreitet und mit aufwändigen und teuren Dichtungen gegenüber dem Werkzeug abgedichtet werden. Ein anderes Verfahren ist das Aufsprühen eines flüssigen Silikons, wie in der US 7,014,809 B2 beschrieben.

Diese Verfahren und Systeme sind mit einem aufwendigen Dichtsystem versehen, welche mit einem werkzeugseitig fixierten Bestandteil verbunden sind. Das macht die Anwendungen ungeeignet für mobile Verfahren.

Andere Varianten benutzen ein Kanalsystem zur Abdichtung. Dieses ist zu unflexibel, um komplizierte dreidimensionale Formen abzubilden. Außerdem sind diese Kanal-Dichtsysteme nicht für ein Arbeiten in schwierigen Arbeitslagen geeignet. Bei den Kanal-Dichtsystemen muss die Membran auf dem Werkzeuggegenstück aufliegen können, da die Anhaftung der Membran erst durch ein dichtes Vakuum erzielt wird. Für Reparaturprozesse in horizontalen Lagen, beispielsweise an Rotoren von Windenergieanlagen, ist diese Technik daher nicht geeignet. Ein weiterer Nachteil der bekannten RVBs ist die Anzahl der Abformungen, die aufgrund der verwendeten Silikonmischungen begrenzt ist.

Ein weiterer Nachteil der bekannten RVB-Lösungen ist die nicht integrierte Heiztechnik. Ein Beheizen ist bei dieser Technologie beispielsweise bauteilseitig oder durch Umhausungen möglich. Dies macht den mobilen Einsatz der Systeme schwierig.

Möglichkeiten auch auf werkzeugabgewandter Seite eine Heizung vorzusehen sind Heizlufttechnologien oder der Einsatz zusätzlicher Heizelemente. Durch die damit verbundene Vielzahl der Einzelteile sind solche Varianten nicht für den mobilen Einsatz geeignet.

Weiterhin sind aus dem Bereich der RVBs Vakuumverteilungssysteme bekannt. Diese Systeme werden jedoch bei unbeheizten Membranen vorgesehen. Die Wärmeübertragung von einer beheizten Membran auf den Faserverbundwerkstoff wird durch ein Kanalsystem behindert.

In der WO 2014/008244 A1 wird ein transparenter, silikonkautschukbasierter Vakuumsack mit integriertem Heizelement und hoher Flexibilität beschrieben. Zur Herstellung wird ein Heizleiter zwischen zwei unvulkanisierte flexible Polymerschichten eingebracht.

Aus der EP 1 147 006 B1 ist ein Verfahren zur Behandlung von faserverstärkten Kunststoffgegenständen, wie Bootskörpern, bekannt. Dabei werden nasslaminierte Bereiche unter Vakuum ausgeheizt. Eine Heizeinrichtung ist innerhalb einer vakuumdichten Folie und von der aushärtenden Oberfläche durch eine Abstandshalterschicht getrennt angeordnet.

In der US 4,554,036 A ist eine transportable Vakuumeinrichtung für Reparaturen von Flugzeugteilen aus Faserverbundwerkstoffen offenbart, wobei zwei Kammern und ein Dichtungssystem für die beheizbare Einrichtung ausgebildet sind.

Aus der DE 10 2011 086 453 A1 ist eine Heizeinrichtung zur Reparatur oder Herstellung von Komponenten einer Windkraftanlage und Teilen davon sowie eine Windkraftanlage offenbart. Die Heizeinrichtung besitzt eine Matte mit einem umlaufenden Kanal, welcher die Matte in einen nach außen dichtenden Bereich und einen über den Kanal evakuierbaren Bereich unterteilt.

Aus US 2013/056131 ist eine Membranpresse gemäß dem Oberbegriff des Anspruchs 1 mit einem Vakuumbeutel mit einer darin angeordneten Heizung zum Reparieren eines Laminats bekannt. Die Membranpresse kann mit mehreren porösen Schichten ausgebildet sein, wobei auf einer dem zu reparierenden Laminat abgewandten Seite an der Heizung ein poröses Entlüftungsmaterial angeordnet ist.

US 2016/009036 A1 und CN 2 709 150 Y betreffen Membranpressen, welche in einem Vakuumbeutel angeordnete Stapel von lose angeordneten Schichten aufweisen, welche infolge einer Evakuierung des Vakuumbeutels aneinandergepresst werden.

FR 2 950 079 A1 offenbart eine Heizvorrichtung, welche während lokaler Wärmebehandlungen verwendet werden kann. Die Heizvorrichtung umfasst in einem Gehäuse angeordnete Heizelemente und eine oberhalb der Heizelemente angeordnete Wärmeisolierung, welche in das Gehäuse eingefasst ist.

Aus US 2012/0145703 A1 ist eine Vorrichtung zum Aushärten eines Verbundteils bekannt. Die Vorrichtung umfasst ein Werkzeug und eine Heizdecke, wobei die Heizdecke ein integriertes magnetisches Material aufweist, welches induktiv erwärmbar ist.

Zusammenfassend ist festzustellen, dass in den Lösungsansätzen nach dem Stand der Technik nur Einzelprobleme gelöst werden und keine geschlossene Lösung für ein mobiles Pressensystem besteht. Dabei sind werkzeugseitige Dichtungen erforderlich und die Lösungen sind nicht gewichtsorientiert und nur für Werkstattreparaturen konzipiert und nicht für Reparaturen im Feld geeignet.

Weiterhin ist bisher große und schwergewichtige Steuerungstechnik notwendig und es besteht keine überzeugende und praktikable Lösung für ein effizientes Vakuumverteilsystem mit integrierter Heizungsfunktion der Membran.

Die Aufgabe der Erfindung besteht darin, eine mobile Membranpresse zur Verfügung zu stellen, welche zur Herstellung hochwertiger Prepreg-Faserverbundlaminate bei Reparaturen einsetzbar ist. Die Membranpresse soll die gleichmäßige und effiziente Beheizung des Reparaturbereiches ermöglichen und die zu behandelnden Bereiche gleichmäßig mit Vakuum versorgen. Weiterhin sollen gekrümmte Flächenbereiche mit der Membranpresse bearbeitet werden können, wobei eine Absaugung von Gasen und Dämpfen über den gesamten Reparaturbereich in jeder Phase der Behandlung sichergestellt sein soll.

Die Aufgabe wird durch einen Gegenstand mit den Merkmalen gemäß Patentanspruch 1 gelöst. Weiterbildungen sind in den abhängigen Patentansprüchen angegeben.

Die Aufgabe der Erfindung wird insbesondere durch eine mobile Membranpresse zur Reparatur von Bauteilen mit faserverstärkten Kunststoffen gelöst, welche eine flexible beheizbare mit Vakuum beaufschlagbare Membran und eine mit dieser verbundenen Peripherie- und Steuereinheit zur Versorgung der Membranpresse mit Vakuum und zur Steuerung und Regelung der Temperatur aufweist. Weiterhin ist die erfindungsgemäße Membranpresse dadurch gekennzeichnet, dass in der Membran eine Heizvorrichtung integriert ausgebildet ist und dass eine umlaufende Dichtung um den zu reparierenden Bereich des Bauteils an der Membran zur vakuumdichten Verbindung der Membran mit dem Bauteil angeordnet ist. Die umlaufende Dichtung ist als Klebeband ausgeführt und zwischen einer bauteilzugewandten Seite der Membran und dem Bauteil ist eine Vakuumverteilschicht auf dem zu reparierenden Bereich des Bauteils angeordnet.

Vorteilhaft ist eine Wärmeisolationsschicht an einer bauteilabgewandten Seite der Membran mit der Membran verbindbar an dieser angeordnet.

Weiterhin vorteilhaft ist die Wärmeisolationsschicht aus einem temperaturstabilem Textil oder aus einem temperaturstabilen Schaummaterial ausgebildet. Bevorzugt ist das temperaturstabile Textil als Glasfasertextil ausgebildet.

Bevorzugt ist die Membran aus drei Lagen aufgebaut, wobei die Heizvorrichtung eine Lage ausbildet und an der bauteilzugewandten Seite sind eine Lage aus besser wärmeleitenden Material und an der bauteilabgewandten Seite eine Lage aus schlechter wärmeleitenden Material angeordnet.

Dabei weist die Dicke der Lage aus schlechter wärmeleitenden Material das 1,5-fache der Dicke der Lage aus besser wärmeleitenden Material auf.

Vorteilhaft ist mindestens ein Temperatursensor und ein Feuchtigkeitssensor zur Steuerung und Regelung der Temperatur an der Membranpresse angeordnet.

Die Membran ist vorteilhaft in mehrere Heizbereiche unterteilt ausgestaltet und in jedem Heizbereich ist bevorzugt mindestens ein Temperatursensor angeordnet. Vorteilhaft ist somit die Temperatur der Heizbereiche separat Steuer- und regelbar ausgeführt.

Nach einer vorteilhaften Ausgestaltung ist die Verbindung der Wärmeisolationsschicht an einer bauteilabgewandten Seite der Membran mit der Membran als Klettverschluss, Druckknopfverschluss, Taschenaufnahme oder als Reißverschluss ausgebildet.

Erfindungsgemäß ist die Heizvorrichtung als Heizleiter ausgeführt und in die Membran integriert ausgebildet, wobei der Heizleiter aus Drähten aus Carbonroving, aus einer Carbonkordel oder aus einem glasfaserummantelten Carbonroving ausgebildet . Alternativ, jedoch nicht zur Erfindung gehörig, ist der Heizleiter aus Kupferlitzen, aus Stahllitzen oder aus metallisierten Kunststoffleitern ausgebildet.

Der Heizleiter ist vorzugsweise mäanderförmig oder in Wendelform mit einem maximalen Abstand von 5 mm zueinander auf einem temperaturfesten Trägermaterial aufgebracht, wobei der Heizleiter mittels Sticktechnologie auf dem Trägermaterial oder als verstrickter Leiter im Trägermaterial fixiert ist.

Die Membran weist bevorzugt einen Anschlussbereich mit einem Vakuumstutzen auf, wobei der Anschlussbereich aus dem flexiblen Material der Membran erweitert und derart ausgebildet ist, dass der Vakuumstutzen und der Anschlussbereich über einen Formschluss miteinander verbunden sind und eine Abdichtung dieser Verbindung über das Vakuum erfolgt.

Vorteilhaft ist die Vakuumverteilschicht aus einem temperaturstabilen flexiblen und thermisch leitfähigem Material auswechselbar und mit der Membran temporär verbindbar ausgebildet.

Nach einer weiteren vorteilhaften Ausgestaltung ist die Vakuumverteilschicht aus einem gewebten Glastextil, aus einem nicht-gewebten Glastextil, aus einem thermisch leitfähigen gewebten Kohlefasertextil oder aus einem thermisch leitfähigen nicht gewebten Kohlefasertextil ausgebildet.

Bevorzugt ist die Membran aus Silikon ausgeführt.

Die Membranpresse ist insbesondere auch dadurch gekennzeichnet, dass eine sehr hohe Heizrate und Prozesszyklen bei deren Einsatz erzielbar sind.Die Heizung ist dabei so ausgelegt, dass Heizraten von mindestens 35 K/min auch auf der Oberfläche von Reparaturstellen an großen Bauteilen im Sinne der Erfindung möglich sind. Nach einem Halteprozess von mindestens 20 bis 30 Minuten, vorzugsweise bei einer Temperatur von 130°C und +/- 10 %, aber auch schon bei geringeren Temperaturen und einer entsprechend längeren Haltedauer wird die Heizung und das Vakuum abgeschaltet, wodurch die Abkühlung der Reparaturstelle eingeleitet wird.

Der Verfahrensablauf wird somit wie folgt realisiert:
- Aufbringen eines Vakuums von mindestens 0,3 bar absolut.
- Heizen mit einer Heizrate von mindestens 35 K/min.
- Halten der Verarbeitungstemperatur des Reparaturmaterials für mindestens 20 bis 30 Minuten.
- Abkühlen durch Abschalten der Heizung.

Die Konzeption der Erfindung besteht darin, dass die Presse im Wesentlichen aus einer Membran aus einem flexiblen Material besteht, welches mit einem integrierten Heizbereich und einem integrierten Vakuumdichtsystem ausgestattet ist. Im Vergleich zu bekannten Membranpressen handelt es sich bei der Membranpresse um ein mobiles System mit modularem Aufbau. Die Membranpresse ist somit auch zur Aushärtung von Bauteilen mit sehr großen oder schweren Formen oder zur Reparatur von montierten oder großen Bauteilen und daher nicht transportablen Bauteilen einsetzbar.

Die Vorteile sind sehr vielgestaltig.

Die erfindungsgemäße Membranpresse bietet die Möglichkeit, dass Membranpressverfahren mobil einzusetzen und so für eine Vielzahl von Reparaturanwendungen zu erschließen. Auf diese Weise kann eine kostengünstige, umweltorientierte Alternative zu bisherigen Reparaturverfahren mit Faserverbundwerkstoffen geschaffen werden, da Verbrauchsmaterialien gespart werden können. Zudem lässt sich die Qualität der Reparatur durch ein gesteuertes Verpressen des Laminates verbessern. Das Verpressen minimiert den Gehalt an Lufteinschlüssen im Laminat und dient zur Erzielung höherer Faservolumengehalte.

Die mobile Einsatzfähigkeit der erfindungsgemäßen Membranpresse wird durch Leichtbau und große Robustheit unterstrichen. Sie ist daher auch für den Einsatz unter widrigen Umgebungsbedingungen geeignet, bei denen bisher keine Reparaturen möglich sind. Die Membranpresse sorgt für eine Entkopplung zwischen Umgebung und Faserverbundaushärtungsprozess, insbesondere bezüglich Temperatur und Feuchtigkeitsbedingungen. Die je nach Reparatursystem gewünschte Temperatur kann durch die leistungsfähige Heizeinrichtung eingestellt werden, was auch Reparaturen im Winter ermöglicht. Durch das Vakuum kommt es zudem zu einem Trocknungseffekt in Abhängigkeit der Siedetemperatur vom Umgebungsdruck, was den Prozess wiederum von der Luftfeuchtigkeit, die großen Einfluss auf die Laminatqualität hat, entkoppelt.

Insgesamt kann durch die Effizienzsteigerung von Reparaturen mittels Faserverbundmaterial ein Beitrag für den rentablen Einsatz von Faserverbundbauteilen, aber auch anderen reparablen Bauteilen, erreicht werden. Darüber hinaus können durch die Erweiterung der Reparaturmöglichkeiten teure Neuanschaffungen vermieden beziehungsweise verzögert werden und auf diese Weise ein ökonomischer und ökologischer Vorteil erzielt werden.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:
- Fig. 1 a, b, c:: Schema der Reparatur von schadhaften Bauteilen mittels mobiler Membranpresse,
- Fig. 2:: Querschnitt der mobilen Membranpresse,
- Fig. 3:: Verbindungssysteme der Wärmeisolationsschicht,
- Fig. 4:: Vakuumanschluss der Membran und
- Fig. 5:: Einsatz der Peripherie- und Steuereinheit.

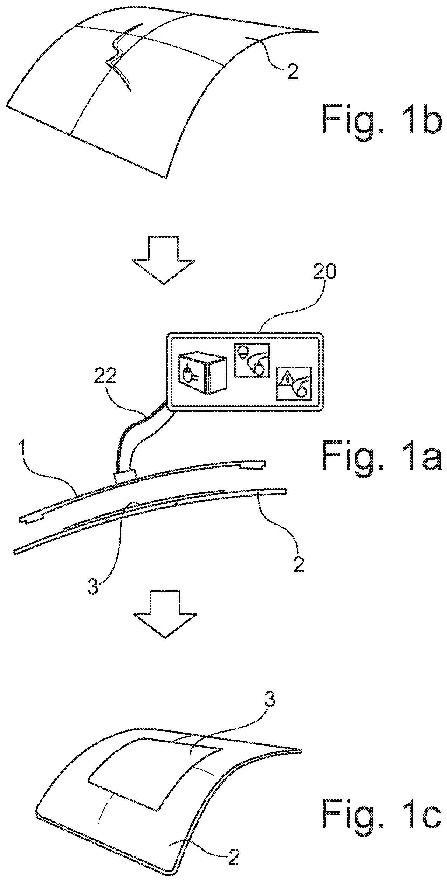

In den Figuren 1a, 1b und 1c ist das Schema der Reparatur von schadhaften Bauteilen mittels der mobilen Membranpresse dargestellt.

In Figur 1a ist die mobile Membranpresse 1, bestehend im Wesentlichen aus einer flexiblen, beheizbaren Verpressmembran sowie einer dazugehörigen mobilen Peripherie- und Steuereinheit 20 gezeigt. Die Verpressmembran, nachfolgend auch als Membran bezeichnet, und die Peripherie- und Steuereinheit 20 sind über Verbindungsleitungen 22, wie beispielsweise über einen Vakuumschlauch und elektrische Leiter, miteinander verbunden.

Die mobile Membranpresse 1 besteht aus einem hochflexiblen und elastischen Material, bevorzugt aus Silikon. Das Material ist aufgrund seiner Flexibilität in der Lage komplizierte 3-dimensionale Formen abzubilden. Durch die Aufbringung eines Vakuums wird das flexible Material an das steife Bauteil 2 angepresst und verdichtet somit das darunterliegende Reparaturmaterial, welches als Faserverbundmaterial ausgeführt ist. Die Flexibilität der Membranpresse 1 sichert die Anpassung und Formgebung des Reparaturmaterials 3 an die Form des Bauteils 2. Auf diese Weise können Bauteile 2 mit hochwertigen, ausgeformten Laminaten repariert werden.

Neben der Funktion des Verpressens hat das Vakuum bei der mobilen Verpressmembran eine weitere Funktion. Beim Einsatz unter freien Umgebungsbedingungen, wie bei einer Reparatur im Feld, ist ein negativer Einfluss der Luftfeuchte auf den Aushärtungsprozess, im Gegensatz zu kontrollierten Bedingungen in der Werkstatt, nicht auszuschließen. Durch den geringen Luftdruck bei Aufbringung eines Vakuums wird der Siedepunkt der vorhandenen feuchten Bestandteile aus der Luft herabgesetzt. Der so entstehende Dampf wird über die Vakuumabsaugung aus dem Laminat entfernt. Ein in die Membranpresse 1 optional integrierter Feuchtigkeitssensor zeigt an, wann dieser Trocknungsprozess abgeschlossen ist und das Faserverbundmaterial auf Aushärtungstemperatur gebracht werden kann. Werden Reparaturen in freier Umgebung durchgeführt, kann auf diese Weise der Einfluss von Luftfeuchte verringert werden. Dieser Vakuumtrockeneffekt trägt somit zu einer erhöhten Laminatqualität in Reparaturfällen bei.

Das notwendige Vakuum wird durch eine in die Peripherie- und Steuereinheit 20 integrierte Vakuumpumpe erzeugt. In der Peripherie- und Steuereinheit 20 findet auch die Temperatursteuerung und Justierung der Prozessparameter der Verpresseinheit statt. Zu diesem Zweck verfügt die Membranpresse 1 über integrierte Temperatursensoren, die mit der Peripherie- und Steuereinheit 20 elektrisch verbunden sind.

In Figur 1b ist perspektivisch die gekrümmte Oberfläche eines Bauteils 2 mit einer schadhaften reparaturbedürftigen Stelle gezeigt. Figur 1a zeigt das Stadium der Reparatur vor dem Aufsetzen der mobilen Membranpresse 1 auf die mit Reparaturmaterial 3 belegte schadhafte Stelle des Bauteils 2 und Figur 1c zeigt schließlich das reparierte Bauteil 2 mit dem Reparaturmaterial 3 nach Abnahme der mobilen Membranpresse 1 vom Bauteil 2.

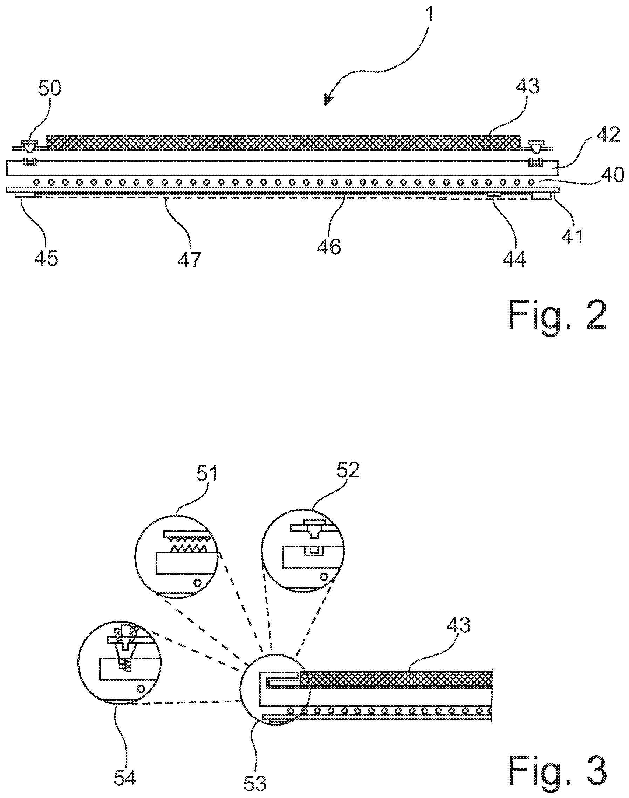

Der grundsätzliche Aufbau der Membranpresse 1 ist in Figur 2 dargestellt.

Die Membranpresse 1 besteht im Wesentlichen aus einer Membran 46, in die eine Heizvorrichtung 40 integriert ist.

Nach einer Ausführungsform der Membran 46 ist die Heizvorrichtung 40 zwischen mindestens zwei Lagen aus flexiblem Material, vorzugsweise Silikon, in die Membranpresse 1 eingebracht.

Nach einer alternativen Ausführungsform der Membran 46 ist diese einlagig mit einem in die Lage integrierten Heizleiter als Heizvorrichtung 40 ausgebildet, welcher beispielsweise in die Membran 46 eingegossen ist.

Jeweils ist die bauteilzugewandte Seite 41 der Membran 46 dabei so gestaltet, dass eine gute Wärmeübertragung über die flexible Schicht zum Bauteil 2 hin stattfindet. Optional kann hier ein modifizierter Elastomertyp mit erhöhter thermischer Leitfähigkeit eingesetzt werden. Die bauteilabgewandte Seite 42 ist so gestaltet, dass möglichst wenig Wärme an die Umgebung abgegeben wird. Die flexible Schicht auf der bauteilabgewandten Seite 42 kann zu diesem Zweck mit erhöhter Dicke im Vergleich zur flexiblen Schicht auf der bauteilzugewandten Seite 41 ausgeführt werden, wobei ein Faktor von bevorzugt mindestens 1,5 Anwendung findet.

Um die Energieeffizienz der mobilen Membranpresse 1 weiter zu erhöhen, ist auf der Oberseite der Membran 46, der bauteilabgewandten Seite 42, eine Wärmeisolationsschicht 43 mittels Verbindungselementen 50 angeordnet. Die Wärmeisolationsschicht 43 besteht bevorzugt in a) einer ersten Ausführung aus einem temperaturfesten Textil, wie beispielsweise einem Glasfasertextil, und in b) einer zweiten Ausführung aus einem im Rahmen des Einsatzbereiches der Membran temperaturstabilen Schaummaterial. Einsetzbar sind dafür beispielsweise Silikonschaum oder andere geeignete Schaummaterialien.

Die zusätzliche Wärmeisolationsschicht 43 bewirkt jedoch ein Aufdicken der Gesamtmembranstruktur. Daraus resultiert gegebenenfalls eine geringere Flexibilität des Aufbaus. Damit die Membranpresse 1 auch an geometrisch stark gekrümmten Oberflächen von Bauteilen 2 ein optimales Anformen realisieren kann, muss die zusätzliche Wärmeisolationsschicht 43 so gestaltet sein, dass sie ohne Aufwand von der flexiblen Membran 46 abgekoppelt werden kann. Bei Anwendungen mit großen geometrischen Anforderungen, kann so weiterhin eine hohe Anformbarkeit und Flexibilität der Membranpresse 1 garantiert werden.

Die Membran 46 ist mit einer umlaufenden Dichtung 45 ausgerüstet. Diese hat die Funktion, einen luftdicht abgeschlossenen Bereich zwischen Membran 46 und dem Bauteil 2 zu erzeugen.

Vakuummembranpressen nach dem Stand der Technik benutzen das aktive Vakuum, um über Saugkanäle eine Dichtwirkung zu erzeugen. Diese Funktion kann jedoch nur erfüllt werden, wenn die Matte bereits vor Aktivieren des Vakuums mit dem Untergrund in Kontakt ist. Bisherige Lösungen können aus diesem Grund nur in horizontalen oder annähernd horizontalen Arbeitslagen eingesetzt werden, bei denen die Membran auf dem Bauteil aufliegt. Um auch in komplizierten Arbeitslagen, wie häufig bei Reparaturen anzutreffen beispielsweise in vertikalen Arbeitslagen eine Funktionsfähigkeit zu gewährleisten, muss die Membran 46 passiv am Untergrund, dem Bauteil 2 haften können. Die passive Dichtung wird in der vorliegenden Erfindung mittels eines klebrigen und dickschichtigen Dichtbandes 45 umgesetzt. Die Haftung zwischen Dichtband 45 und flexibler Elastomerschicht der Membran 46 wird hierbei durch die Behandlung mit einem sanften Lösungsmittel, wie Isopropanol, realisiert. Das Dichtband 45 verändert seine Struktur durch Temperatureinwirkung während des Aushärteprozesses in der Weise, dass es nach dem Aushärteprozess rückstandsfrei von der Membran und dem Untergrund, dem Bauteil 2, abgezogen werden kann.

Über mindestens einen hier nicht dargestellten Vakuumanschluss wird im abgedichteten Bereich ein Unterdruck erzeugt. Dabei ist sicherzustellen, dass der Unterdruck flächig über den gesamten Membranbereich gleichmäßig verteilt vorliegt. Zu diesem Zweck ist auf der Unterseite der Membran 46 eine dünne luftdurchlässige Schicht, die Vakuumverteilschicht 47 auswechselbar befestigt. Die Schicht besteht in einer ersten Ausführung aus einem gewebten (woven) Textil, beispielsweise einem Glastextil oder einem Polyestertextil, in einer zweiten Ausführung aus einem nicht-gewebten (non-woven) Textil, beispielsweise einem Glastextil oder einem Polyestertextil, in einer dritten Ausführung aus einem thermisch leitfähigen gewebten Kohlefasertextil, in einer vierten Ausführung aus einem thermisch leitfähigen nicht gewebten Kohlefasertextil oder in einer fünften Ausführung aus einer textilartigen Metallstruktur. Ganz allgemein ist die Vakuumverteilschicht aus einem temperaturstabilen, flexiblen und thermisch leitfähigen Material ausgebildet.

Die Vakuumverteilschicht 47 ist lösbar mit der Membran 46 verbunden, analog zur Wärmeisolationsschicht 43. Beispielsweise über einen Klettverschluss, über Druckknöpfe, über eine Formschlüssigkeit zwischen Membran 46 und Vakuumverteilschicht nach dem Taschenprinzip und in einer weiteren Ausführung über einen Reißverschluss.

Die Vakuumverteilschicht 47 ist verhältnismäßig kostengünstig und kann bei Verschmutzung ausgetauscht werden. Grundsätzlich ist die Lebensdauer der genannten Vakuumverteilschichtmaterialien für eine Vielzahl von Einsatzzyklen ausreichend. Zusätzlich dient sie als Schutzschicht vor aggressiven Harzbestandteilen, wie bei Epoxydharzen, die eine zersetzende Wirkung auf bestimmte Silikonmischungen haben. Zu Überwachungs-, Steuer- und Regelungszwecken ist in den Aufbau ein oder mehrere Temperatursensoren 44 integriert.

Figur 3 zeigt Möglichkeiten der Kopplung von Membran 46 und Wärmeisolationsschicht 43. In einer ersten Ausführung erfolgt die temporäre reversible Verbindung über einen Klettverschluss 51, in einer zweiten Ausführung über Druckknöpfe 52, in einer dritten Ausführung über eine Formschlüssigkeit zwischen Membran 46 und Wärmeisolationsschicht 43 nach dem Taschenprinzip 53 und in einer vierten Ausführung über einen Reißverschluss 54.

Nach einer vorteilhaften Ausgestaltung der Erfindung wird zur Umwandlung von elektrischer Energie in Wärme in die Membran 46 eine Heizvorrichtung 40 als Heizleiter integriert. Um die gute Anformbarkeit der Verpressmembran an 3-dimensionale Formen zu gewährleisten muss auch dieser Heizleiter eine hohe Flexibilität besitzen. Zu diesem Zweck besteht der Leiter aus sehr dünnen Drähten, deren Durchmesser bevorzugt im Zehntelmilimeterbereich liegen. Diese dünnen Drähte bestehen in erster Ausführung aus Carbonrovings, in zweiter Ausführung aus einer Carbonkordel, in dritter Ausführung aus einem glasfaserummantelten Carbonroving, in vierter Ausführung aus Kupferlitzen, in einer fünften Ausführung aus Stahllitzen und in einer sechsten Ausführung aus metallisierten Kunststoffleitern. Um eine gleichmäßige Verteilung der durch die Heizleiter erzeugten Wärme innerhalb der Membran 46 zu erzeugen, werden die Leiter in Wendelform oder in Mäanderform mit einem maximalen Abstand von 5 mm zueinander auf einem temperaturfesten Trägermaterial abgelegt. Der Heizleiter wird hierbei mittels Sticktechnologie auf dem Trägermaterial fixiert. Anschließend wird die Heizvorrichtung 40 in die Membran 46 eingegossen.

Bei Membranpressen nach dem Stand der Technik entfällt ein großer Anteil der Aushärtezeit auf den Aufheizprozess. Um diesen Prozess zu beschleunigen wird die Heizvorrichtung 40 nach der Erfindung mit einer Leistung von bevorzugt 6000 W/ m² ausgelegt, was über der Leistung bisher bekannter Heizmembranen für die Faserverbundreparatur liegt.

Mittels dieser Dimensionierung kann die Membran 46 auf Temperaturen von bis zu 200°C aufgeheizt werden im Unterschied zu den sonst üblichen 60 - 90 °C. Ein mit diesen hohen Temperaturen erreichbarer positiver Nebeneffekt besteht darin, dass neben der beschleunigten Aushärtung bekannter Harzsysteme die hohen Temperaturen auch zur Verarbeitung von thermoplastischen Materialien geeignet sind. Dieser Vorteil wird auch durch die gezielte Verringerung der Wärmeabstrahlung nach außen durch die Wärmeisolationsschicht 43 erreicht.

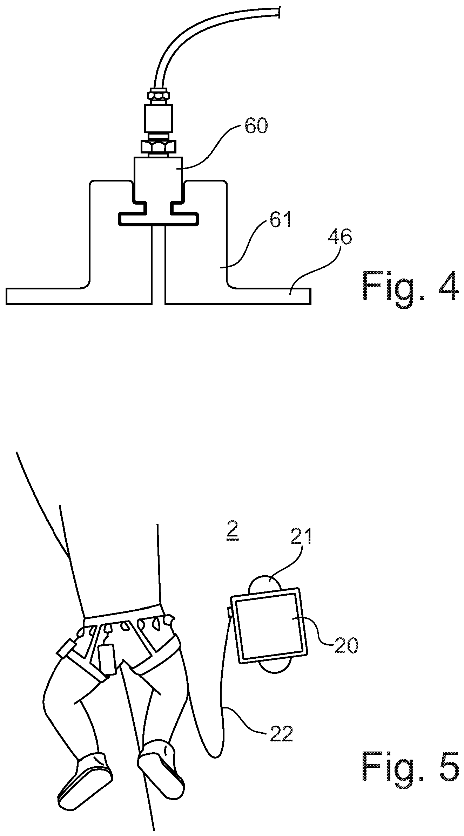

Zur Aufbringung des Vakuums ist die heizbare Membran 46 gemäß Figur 4 mit mindestens einem Vakuumanschluss versehen. Um eine hohe Haltbarkeit des Anschlusses zu garantieren wird dieser Bereich der Membran 46 als Anschlussbereich 61 verstärkt ausgeführt. Die Anbindung der Membran 46 erfolgt dabei über einen Formschluss zwischen metallischem Vakuumstutzen 60 und dem flexiblem Material des Anschlussbereiches 61 der Membran 46. Auf diese Weise kann eine sehr kostengünstige, leichte und wartungsfreundliche Vakuumanbindung realisiert werden.

Die Heiztemperatur der Membran 46 wird über die Steuereinheit 20 als Funktion über die Zeit gesteuert. Zu diesem Zweck ist in einem zentralen Bereich der Membran 46 ein Temperatursensor 44 angeordnet, welcher mit der Steuereinheit 20 verbunden ist.

In einer bevorzugten Ausführung ist die Membran 46 mit einer Vielzahl von Heizbereichen ausgestattet. Jeder dieser Heizbereiche ist mit einem getrennten Heizleiterkreislauf und einem separaten Thermoelement als Temperatursensor 44 ausgestattet. Die Temperatursensoren 44 sind bevorzugt zentral in den einzelnen Heizbereichen angeordnet. Bei großen Membranen 46 kann auf diese Weise auf variierende Wärmeleitfähigkeiten des zu reparierenden Substrates der Bauteile 2 reagiert werden und so ein Angleichen der Aushärtetemperatur erreicht werden.

Ein gutes Beispiel für die Notwendigkeit dieser Funktion findet sich im Bereich der Windtechnik. So befinden sich beispielsweise innerhalb der Faserverbundstruktur von Rotoren bei Windrädern Bereiche, welche neben dem klassischen Faserverbund mit einer dicken Kernschicht aus Balsaholz aufgebaut sind. Diese Bereiche sind wesentlich schlechter wärmeleitend als andere Bereiche. Hier muss für das Erreichen und Halten eines voreingestellten Heiztemperaturniveaus weniger Wärmeenergie eingebracht werden. Diese Anpassung wird über die getrennt gesteuerten Heizzonen realisiert.

In Figur 5 ist eine Peripherie- und Steuereinheit 20 dargestellt, welche an der Oberfläche eines Bauteils 2 fixiert ist.

Neben dem Vakuumanschluss sind auch die Spannungsversorgung und die Anschlüsse für die integrierten Heizelemente zur Temperaturregelung mit einer Peripherie- und Steuereinheit 20 verbunden. In der Steuereinheit 20 sind alle zur Steuerung der Membranpresse 1 notwendigen Geräte und Komponenten integriert, beispielsweise die Vakuumpumpe, die Temperatursteuerung und die Spannungsversorgung. Die Steuerungstechnik ist in einen Koffer integriert, der sich problemlos zum Ort der jeweiligen Anwendung transportieren lässt. Der Steuerungskoffer zeichnet sich dabei durch seine geringen Abmaße, sein niedriges Gewicht von unter 5 kg und seine ergonomische Form aus. Durch das einfache Plug-and-Go Prinzip der Steuereinheit 20 kann beim Aufbau im Vergleich zur Steuerung von heutigen Faserverbundaushärtungsprozessen wesentliche Prozesszeit eingespart werden. Um die Membranpresse 1 auch in ungünstigen Arbeitslagen, wie beispielsweise bei der Reparatur von Rotoren bei Windenergieanlagen, einsetzen zu können, ist die Steuereinheit 20 mit Saugnäpfen 21 als Befestigungselement ausgerüstet. Auf diese Weise kann die Peripherie- und Steuereinheit 20 bei Reparaturen direkt am Substrat befestigt werden. Dabei ist die Peripherie- und Steuereinheit 20 zusätzlich über eine Zugsicherung in den Verbindungsleitungen 22 gegen Absturz gesichert.

Mit der Erfindung sind zahlreiche Vorteile verbunden.

Mit der mobilen Membranpresse können hochwertige, durch Vakuumverpressung komprimierte Laminate, mit höherer Qualität durch geringeren Porengehalt auch im Feld auf der Baustelle, am Windblatt hergestellt werden.

Eine Steigerung der Laminatqualität wird durch eine gleichmäßige Verpressung erreicht.

Eine weitere Steigerung der Laminatqualität wird durch den Vakuumtrocknungseffekt und das Entkoppeln von Umgebungsbedingungen durch ein geschlossenes System erreichbar.

Die Aushärtung der Reparaturstellen sind durch die Entkopplung von den Umgebungsbedingungen auch bei widrigem Klima, zum Beispiel im Winter, möglich.

Besonders vorteilhaft ist, dass Temperaturen bis zu 200°C erreichbar sind, was bei entsprechenden Stoffsystemen für eine beschleunigte Aushärtung sorgt oder die zur Verarbeitung thermoplastischer Systeme erforderlich sind. Vorteilhaft ist weiterhin die Einsparung von Rüstzeit durch einfache Plug-and-Go Steuerung und eine einfache und zeiteffizient herstellbare Dichtung.

Die hohe Flächenleistung von 6000 W/m² ermöglicht, den Aufheizprozess signifikant zu beschleunigen und erspart deshalb Prozesszeit.

Die direkte Beheizung der Membran ist weiterhin eine sehr effiziente Methode der Wärmeaufbringung im Vergleich zur Beheizung einer Kammer mit den auszuhärtenden Bauteilen.

Der Wärmeeintrag ist durch die Klebebefestigung der Membranpresse auf beliebig orientierten Flächen, wie zum Beispiel auf der Bauteiloberseite oder an vertikalen Flächen, möglich. Dies führt zu einer hohen Flexibilität der Dichtlösung und ist ein wesentlicher Vorteil gegenüber anderen Dichtsystemen. Ein Teil der Vorteile wird durch die passive Dichtung, wie beispielsweise durch das selbstklebende Band erreicht, wodurch auch das Anbringen der Matte in schwierigen Arbeitslagen möglich wird. Passive Dichtungen sind im vorliegenden Sinne Dichtungen, die sich durch eine temporäre und reversible Anhaftung durch Kleben auszeichnen.

Weitere Vorteile bestehen in der hohen Anzahl an möglichen Abformungen von ca. 5000, bedingt durch den Einsatz eines robusten Silikontyps und dem einfachen Transport der mobilen Membranpresse durch die konsequente Anwendung von Leichtbaulösungen.

Die mit der mobilen modularen Membranpresse umsetzbare Reparaturtechnologie führt zu Einsparungen von Verbrauchsmaterial und darüber hinaus ermöglicht die Reparatur die Reduzierung von Neuanschaffungen und verbessert somit die Ökobilanz durch die Verlängerung des Produktlebenszyklus.

Weiterhin spart die unaufwändige Prozesstechnik Investitionskosten und das sehr einfache Prozesshandling spart Personalkosten.

Der Aushärtungsprozess kann gegebenenfalls beschleunigt werden, was wiederum geringere Personalkosten, geringe Energiekosten und eine geringe Auslastung der Prozesstechnik nach sich zieht.

### Bezugszeichenliste

- 1: Mobile Membranpresse
- 2: Bauteil
- 3: Reparaturmaterial
- 20: Peripherie- und Steuereinheit
- 21: Befestigungselement
- 22: Verbindungsleitungen
- 40: Heizvorrichtung
- 41: Bauteilzugewandte Seite
- 42: Bauteilabgewandte Seite
- 43: Wärmeisolationsschicht
- 44: Temperatursensor
- 45: Umlaufende Dichtung
- 46: Membran
- 47: Vakuumverteilschicht
- 50: Verbindungselement
- 51: Klettverschluss
- 52: Druckknopfverschluss
- 53: Taschenaufnahme
- 54: Reißverschluss
- 60: Vakuumstutzen
- 61: Anschlussbereich Membran

## Patentansprüche

1. Mobile Membranpresse (1) zur Reparatur von Bauteilen (2) mit faserverstärkten Kunststoffen, aufweisend eine flexible beheizbare mit Vakuum beaufschlagbare Membran (46) und eine mit dieser verbundenen Peripherie- und Steuereinheit (20) zur Versorgung der Membranpresse (1) mit Vakuum und zur Steuerung und Regelung der Temperatur,wobei in der Membran (46) eine Heizvorrichtung (40) integriert ausgebildet ist und wobei eine umlaufende Dichtung (45) um den zu reparierenden Bereich des Bauteils (2) an der Membran (46) zur vakuumdichten Verbindung der Membran (46) mit dem Bauteil (2) angeordnet ist, wobei die umlaufende Dichtung (45) als Klebeband ausgeführt ist und wobei zwischen einer bauteilzugewandten Seite (41) der Membran (46) und dem Bauteil (2) eine Vakuumverteilschicht (47) auf dem zu reparierenden Bereich des Bauteils (2) angeordnet ist, wobei die Heizvorrichtung (40) als Heizleiter ausgeführt, **dadurch gekennzeichnet, dass** die Heizvorrichtung in die Membran (46) integriert ausgebildet ist, wobei der Heizleiter aus Drähten aus Carbonroving, aus einer Carbonkordel oder aus einem glasfaserummantelten Carbonroving ausgebildet ist.

2. Membranpresse (1) nach Anspruch 1, **dadurch gekennzeichnet, dass** eine Wärmeisolationsschicht (43) an einer bauteilabgewandten Seite (42) der Membran (46) mit der Membran (46) verbindbar an dieser angeordnet ist.

3. Membranpresse (1) nach Anspruch 2, **dadurch gekennzeichnet, dass** die Wärmeisolationsschicht (43) aus einem temperaturstabilen Textil oder aus einem temperaturstabilen Schaummaterial ausgebildet ist.

4. Membranpresse (1) nach einem der Ansprüche 1 bis 3 **dadurch gekennzeichnet, dass** die Membran (46) aus drei Lagen aufgebaut ist, wobei die Heizvorrichtung (40) eine Lage ausbildet und an der bauteilzugewandten Seite (41) eine Lage aus besser wärmeleitenden Material und an der bauteilabgewandten Seite (42) eine Lage aus schlechter wärmeleitenden Material angeordnet sind.

5. Membranpresse (1) nach Anspruch 4, **dadurch gekennzeichnet, dass** die Dicke der Lage aus schlechter wärmeleitenden Material das 1,5-fache der Dicke der Lage aus besser wärmeleitenden Material aufweist.

6. Membranpresse (1) nach einem der Ansprüche 1 bis 5, **dadurch gekennzeichnet, dass** mindestens ein Temperatursensor (44) und/oder ein Feuchtigkeitssensor zur Steuerung und Regelung der Temperatur an der Membranpresse (1) angeordnet ist.

7. Membranpresse (1) nach Anspruch 6, **dadurch gekennzeichnet, dass** die Membran (46) in mehrere Heizbereiche unterteilt ausgestaltet ist und dass in jedem Heizbereich mindestens ein Temperatursensor (44) angeordnet ist und die Temperatur der Heizbereiche separat steuer- und regelbar ausgeführt ist.

8. Membranpresse (1) nach einem der Ansprüche 1 bis 7, **dadurch gekennzeichnet, dass** die Verbindung der Wärmeisolationsschicht (43) an einer bauteilabgewandten Seite (42) der Membran (46) mit der Membran (46) als Klettverschluss (51), Druckknopfverschluss (52), Taschenaufnahme (53) oder als Reißschluss (54) ausgebildet ist.

9. Membranpresse (1) nach einem der Ansprüche 1 bis 8, **dadurch gekennzeichnet, dass** der Heizleiter mäanderförmig oder in Wendelform mit einem maximalen Abstand von 5 mm zueinander auf einem temperaturfesten Trägermaterial aufgebracht ist, wobei der Heizleiter mittels Sticktechnologie auf dem Trägermaterial fixiert ist.

10. Membranpresse (1) nach einem der Ansprüche 1 bis 9, **dadurch gekennzeichnet, dass** die Membran (46) einen Anschlussbereich (61) mit einem Vakuumstutzen (60) aufweist, wobei der Anschlussbereich (61) aus dem flexiblen Material der Membran (46) erweitert und derart ausgebildet ist, dass der Vakuumstutzen (60) und der Anschlussbereich (61) über einen Formschluss miteinander verbunden sind und eine Abdichtung dieser Verbindung über das Vakuum erfolgt.

11. Membranpresse (1) nach einem der Ansprüche 1 bis 10, **dadurch gekennzeichnet, dass** die Vakuumverteilschicht (47) mit der Membran (46) temporär verbindbar ausgebildet ist.

12. Membranpresse (1) nach Anspruch 11, **dadurch gekennzeichnet, dass** die Vakuumverteilschicht (47) aus einem gewebten Textil, aus einem nicht-gewebten Textil, aus einem thermisch leitfähigen gewebten Kohlefasertextil oder aus einem thermisch leitfähigen nicht gewebten Kohlefasertextil ausgebildet ist.

13. Membranpresse (1) nach einem der Ansprüche 1 bis 12, **dadurch gekennzeichnet, dass** die Membran (46) aus Silikon ausgeführt ist.

14. Membranpresse (1) nach einem der Ansprüche 1 bis 13, **dadurch gekennzeichnet, dass** die Heizvorrichtung derart ausgelegt ist, dass Heizraten von mindestens 35 K/min auf der Oberfläche von Reparaturstellen erreicht werden.

15. Membranpressverfahren zur Reparatur von Bauteilen (2) mit faserverstärkten Kunststoffen mit einer Membranpresse (1) gemäß den Ansprüchen 1 bis 14, bei welchem
- ein Vakuum von mindestens 0,3 bar aufgebracht wird,
- mit einer Heizrate von mindestens 35 K/min geheizt wird
- eine Verarbeitungstemperatur des Reparaturmaterials für mindestens 20 Minuten bis 30 Minuten gehalten wird und danach
- die Heizung abgeschaltet wird, wodurch eine Abkühlung der Reparaturstelle eingeleitet wird.

16. Membranpressverfahren nach Anspruch 15, **dadurch gekennzeichnet, dass** der Halteprozess für mindestens 20 Minuten bis 30 Minuten bei einer Temperatur von 130 °C +/- 10% durchgeführt wird.

## Claims

1. A mobile membrane press (1) for repairing components (2) with fiber-reinforced plastics, having a flexible heatable membrane (46) to which vacuum can be applied and a peripheral and control unit (20) connected therewith for supplying the membrane press (1) with vacuum and for controlling and regulating the temperature, wherein a heating device (40) is formed in the membrane (46) in an integrated manner and wherein a circumferential seal (45) around the area of the component (2) to be repaired is arranged on the membrane (46) for the vacuum-tight connection of the membrane (46) to the component (2), wherein the circumferential seal (45) is embodied as a tape and wherein a vacuum distribution layer (47) is arranged on the area of the component (2) to be repaired between a side (41) of the membrane (46) facing the component and the component (2), wherein the heating device (40) is embodied as a heat conductor, **characterized in that** the heating device is formed integrated into the membrane (46), wherein the heat conductor is formed from wires of carbon roving, from a carbon cord or from a carbon roving wrapped with fiber glass.

2. The membrane press (1) according to claim 1, **characterized in that** a heat insulation layer (43) is arranged on a side (42) of the membrane (46) facing away from the component in a manner connectable to the membrane (46).

3. The membrane press (1) according to claim 2, **characterized in that** the heat insulation layer (43) is formed from a temperature-stable textile or from a temperature-stable foam material.

4. The membrane press (1) according to one of claims 1 to 3, **characterized in that** the membrane (46) is made of three layers, wherein the heating device (40) forms one layer and one layer of better heat-conducting material is arranged on the side (41) facing the component and one layer of worse heat-conducting material is arranged on the side (42) facing away from the component.

5. The membrane press (1) according to claim 4, **characterized in that** the thickness of the layer of worse heat-conducting material has 1.5 times the thickness of the layer of better heat-conducting material.

6. The membrane press (1) according to one of claims 1 to 5, **characterized in that** at least one temperature sensor (44) and/or one humidity sensor for controlling and regulating the temperature is arranged on the membrane press (1).

7. The membrane press (1) according to claim 6, **characterized in that** the membrane (46) is designed divided into several heating areas and that in every heating area at least one temperature sensor (44) is arranged and the temperature of the heating areas is embodied such that it can be controlled and regulated in a separate manner.

8. The membrane press (1) according to one of claims 1 to 7, **characterized in that** the connection of the heat insulation layer (43) is formed on a side (42) of the membrane (46) facing away from the component, with the membrane (46) as a hook and loop fastener (51), snap fastener (52), pocket holder (53) or as a zip fastener (54).

9. The membrane press (1) according to one of claims 1 to 8, **characterized in that** the heat conductor is attached in a meander shape or in a spiral shape with a maximum distance of 5 mm to one another on a temperature-stable carrier material, wherein the heat conductor is fixed on the carrier material by means of embroidery technology.

10. The membrane press (1) according to one of claims 1 to 9, **characterized in that** the membrane (46) has a connection region (61) with a vacuum port (60), wherein the connection region (61) is formed from the flexible material of the membrane (46) in an extended manner and such that the vacuum port (60) and the connection region (61) are connected to one another via a positive fit and this connection is sealed via the vacuum.

11. The membrane press (1) according to one of claims 1 to 10, **characterized in that** the vacuum distribution layer (47) is formed such that it can be temporarily connected to the membrane (46).

12. The membrane press (1) according to claim 11, **characterized in that** the vacuum distribution layer (47) is formed from a woven textile, from a non-woven textile, from a thermally conductive woven carbon fiber textile or from a thermally conductive non-woven carbon fiber textile.

13. The membrane press (1) according to one of claims 1 to 12, **characterized in that** the membrane (46) is embodied from silicone.

14. The membrane press (1) according to one of claims 1 to 13, **characterized in that** the heating device is adapted such that heating rates of at least 35 K/min are reached on the surface of repair locations.

15. A membrane pressing method for repairing components (2) with fiber-reinforced plastics with a membrane press (1) according to claims 1 to 14, wherein
- a vacuum of at least 0.3 bar is applied,
- heating is conducted with a heating rate of at least 35 K/min,
- a processing temperature of the repair material is held for at least 20 minutes to 30 minutes, and afterwards
- the heating device is switched off, thus introducing a cooling of the repair location.

16. The membrane pressing method according to claim 15, **characterized in that** the holding process is performed for at least 20 minutes to 30 minutes at a temperature of 130°C +/- 10%.

## Revendications

1. Presse à membrane mobile (1) pour la réparation de composants (2) avec des matières plastiques renforcées par des fibres, présentant une membrane chauffante flexible (46) pouvant être sollicitée avec du vide et un module de périphériques et de commande (20) connecté à celle-ci pour l'alimentation en vide de la presse à membrane (1) et pour la commande et la régulation de la température, dans laquelle un dispositif de chauffage (40) est réalisé de manière intégrée dans la membrane (46) et dans laquelle un joint périphérique (45) est disposé autour de la région à réparer du composant (2) sur la membrane (46) pour la connexion étanche au vide de la membrane (46) au composant (2), dans laquelle le joint périphérique (45) est réalisé en tant que ruban adhésif et dans laquelle une couche de répartition de vide (47) est disposée sur la région à réparer du composant (2) entre un côté (41) tourné vers le composant de la membrane (46) et le composant (2), dans laquelle le dispositif de chauffage (40) est réalisé en tant que conducteur chauffant, **caractérisée en ce que** le dispositif de chauffage est réalisé de manière intégrée dans la membrane (46), dans laquelle le conducteur chauffant est réalisé à partir de fils en stratifil de carbone, en une cordelette de carbone ou en un stratifil de carbone enveloppé de fibres de verre.

2. Presse à membrane (1) selon la revendication 1, **caractérisée en ce qu'**une couche d'isolation thermique (43) est disposée sur un côté (42) détourné du composant de la membrane (46) sur la membrane (46) de manière à pouvoir être connectée à celle-ci.

3. Presse à membrane (1) selon la revendication 2, **caractérisée en ce que** la couche d'isolation thermique (43) est réalisée en un textile stable en température ou en un matériau de mousse stable en température.

4. Presse à membrane (1) selon une des revendications 1 à 3, **caractérisée en ce que** la membrane (46) est constituée de trois couches, dans laquelle le dispositif de chauffage (40) forme une couche, et une couche de matériau à meilleure conductivité thermique est disposée sur le côté (41) tourné vers le composant et une couche de matériau à plus mauvaise conductivité thermique est disposée sur le côté (42) détourné du composant.

5. Presse à membrane (1) selon la revendication 4, **caractérisée en ce que** l'épaisseur de la couche de matériau à plus mauvaise conductivité thermique présente le multiple de 1,5 de l'épaisseur de la couche de matériau à meilleure conductivité thermique.

6. Presse à membrane (1) selon une des revendications 1 à 5, **caractérisée en ce qu'**au moins un capteur de température (44) et/ou un capteur d'humidité pour la commande et la régulation de la température est disposé sur la presse à membrane (1).

7. Presse à membrane (1) selon la revendication 6, **caractérisée en ce que** la membrane (46) est configurée de manière divisée en plusieurs régions chauffantes, et qu'au moins un capteur de température (44) est disposé dans chaque région chauffante et la température des régions chauffantes est réalisée de manière à pouvoir être commandée et régulée séparément.

8. Presse à membrane (1) selon une des revendications 1 à 7, **caractérisée en ce que** la connexion de la couche d'isolation thermique (43) à la membrane (46) sur un côté (42) détourné du composant de la membrane (46) est réalisée en tant que fermeture autoagrippante (51), fermeture par bouton-pression (52), logement de poche (53) ou en tant que fermeture éclair (54).

9. Presse à membrane (1) selon une des revendications 1 à 8, **caractérisée en ce que** le conducteur chauffant est appliqué sur un matériau de support résistant aux écarts de température en forme de méandres ou en spirale à un écart maximal de 5 mm l'un de l'autre, dans laquelle le conducteur chauffant est fixé sur le matériau de support au moyen d'une technologie de broderie.

10. Presse à membrane (1) selon une des revendications 1 à 9, **caractérisée en ce que** la membrane (46) présente une région de raccordement (61) à une tubulure à vide (60), dans laquelle la région de raccordement (61) est élargie à partir du matériau flexible de la membrane (46) et réalisée de telle sorte que la tubulure à vide (60) et la région de raccordement (61) sont connectées l'une à l'autre par le biais d'une conjugaison de formes et une étanchéification de cette connexion s'effectue par le biais du vide.

11. Presse à membrane (1) selon une des revendications 1 à 10, **caractérisée en ce que** la couche de répartition de vide (47) est réalisée de manière à pouvoir être connectée temporairement à la membrane (46).

12. Presse à membrane (1) selon la revendication 11, **caractérisée en ce que** la couche de répartition de vide (47) est réalisée en un textile tissé, en un textile non tissé, en un textile de fibres de carbone tissé thermiquement conducteur ou en un textile de fibres de carbone non tissé thermiquement conducteur.

13. Presse à membrane (1) selon une des revendications 1 à 12, **caractérisée en ce que** la membrane (46) est réalisée en silicone.

14. Presse à membrane (1) selon une des revendications 1 à 13, **caractérisée en ce que** le dispositif de chauffage est conçu de telle sorte que des débits de chauffage d'au moins 35 K/min sont atteints sur la surface de points de réparation.

15. Procédé de presse à membrane pour la réparation de composants (2) avec des matières plastiques renforcées par des fibres avec une presse à membrane (1) selon les revendications 1 à 14, lors duquel
- un vide d'au moins 0,3 bar est appliqué,
- un chauffage avec un débit de chauffage d'au moins 35 K/min est réalisé,
- une température de transformation du matériau de réparation est maintenue pendant au moins 20 minutes à 30 minutes, puis
- le chauffage est éteint, moyennant quoi un refroidissement du point de réparation est démarré.

16. Procédé de presse à membrane selon la revendication 15, **caractérisé en ce que** le processus de maintien pendant au moins 20 minutes à 30 minutes est réalisé à une température de 130 °C +/- 10 %.
